# EUROPÄISCHE PATENTSCHRIFT

(11) **EP 2 783 119 B1**
(45) Veröffentlichungstag und Bekanntmachung des Hinweises auf die Patenterteilung: **24.05.2017**
(21) Anmeldenummer: 12815626.2
(22) Anmeldetag: 22.11.2012
(51) Int. Cl.: F16B 5/01

(54) **VORRICHTUNG ZUR KRAFTEINLEITUNG IN EIN BAUTEIL AUS FASERVERBUNDWERKSTOFF**
DEVICE FOR INTRODUCING FORCE INTO A COMPONENT OF FIBRE COMPOSITE MATERIAL
DISPOSITIF POUR APPLIQUER UNE FORCE À UNE PIÈCE STRUCTURALE EN MATÉRIAU RENFORCÉ PAR FIBRES

(30) Priorität: 24.11.2011 DE 102011119251
(43) Veröffentlichungstag der Anmeldung: 01.10.2014
(73) Patentinhaber: Leichtbau-Zentrum Sachsen GmbH, 01307 Dresden (DE)
(72) Erfinder: HUFENBACH, Werner, 01324 Dresden (DE); LEPPER, Martin, 01279 Dresden (DE); WERNER, Jens, 01640 Coswig (DE); LADUSCH, Enrico, 01187 Dresden (DE)
(86) Internationale Anmeldenummer: PCT/DE2012/100356
(87) Internationale Veröffentlichungsnummer: WO 2013/075707

(56) Entgegenhaltungen:
- EP-A1- 1 712 803
- EP-A2- 2 316 724
- FR-A1- 2 944 329

## Beschreibung

Die Erfindung betrifft eine Vorrichtung zur Krafteinleitung in ein Bauteil aus Faserverbundwerkstoff mittels einer Schraubverbindung mit einem in einem Durchgang des Bauteils angeordneten bolzenartigen Anschlusselement.

Die Vorrichtung wird bei Konstruktionen verwendet, die mit Bauteilen aus relativ weichem Werkstoff wie z.B. mit einer Platte aus faserverstärktem Kunststoff, punktuell zu verbinden sind, wobei an der Konstruktion wirkende Kräfte in die Bauteile aus Faserverbundwerkstoff übertragen werden.

Die bekannten Verbindungen bestehen im Wesentlichen aus einem das Kunststoffbauteil durchdringenden, zumeist metallischen Anschlusselement, das mit dem Bauteil ähnlich einer Schraubbolzenverbindung verschraubt wird.

Aus der DE 10 2006 013 069 B3 ist eine zweiarmige Bolzenverbindung zum Verbinden lastübertragender Strukturbauteile an einem Flugzeug bekannt, bei der mittels eines konischen Bolzens und einer konischen, geschlitzten Hülse ein erstes Bauteil aus Faserverbundmaterial, welches von einer Schraubbuchse eingefasst ist, mit einem gabelförmigen zweiten Bauteil verbunden ist. Der Bolzen greift in einem Winkel ungleich 90° am Faserverbund-Bauteil an. Die Bolzenverbindung kompensiert einen beidseitig gleichgerichteten jedoch schrägen, nicht rechtwinkligen Lasteintrag in das Faserverbund-Bauteil und bezweckt eine Ablösung der sonst nötigen schrägen Aufdickung des Faserverbund-Bauteils.

Vorrichtungen zur Krafteinleitung in ein Bauteil aus Faserverbundwerkstoff betreffen auch besonders dynamisch wirkende Schraubverbindungen, die durch einen ungleichmäßigen Eintrag von Querkräften eine Hebelwirkung über das Anschlusselement verursachen und somit ein Kipp- bzw. Biegemoment in das Faserverbund-Bauteil eintragen.

Derartige Vorrichtungen werden beispielsweise im Bereich der Kraftfahrzeugtechnik bei der Radaufhängung oder der Querlenkeranbindung an Faserverbundbauteile angewandt.

Die - vornehmlich dynamisch - wirkenden Kräfte werden über das Anschlusselement in den Lochquerschnitt des Faserverbundbauteils eingeleitet, wobei besonders flächige Bauteile mit geringer Dicke eine hohe Belastung erfahren. Infolge der dynamischen Kräfte kommt es zu minimalen Relativbewegungen des metallischen Anschlusselements gegenüber der Faserverbundstruktur des Bauteils, wobei ein sogenannter Schwingreibverschleiß am Faserverbundbauteil auftritt. Die Schwingreibvorgänge können sowohl eine Schädigung der Faserverbundstruktur als auch eine Schwächung des metallischen Anschlusselements bewirken.

Im Trend der Platz- und Materialökonomie, insbesondere im Kraftfahrzeugbereich, sind zunehmend Verbindungen mit einer einseitigen Krafteinleitung in das Kunststoffbauteil gefordert, die eine besondere hohe Belastung des Bauteils ergeben.

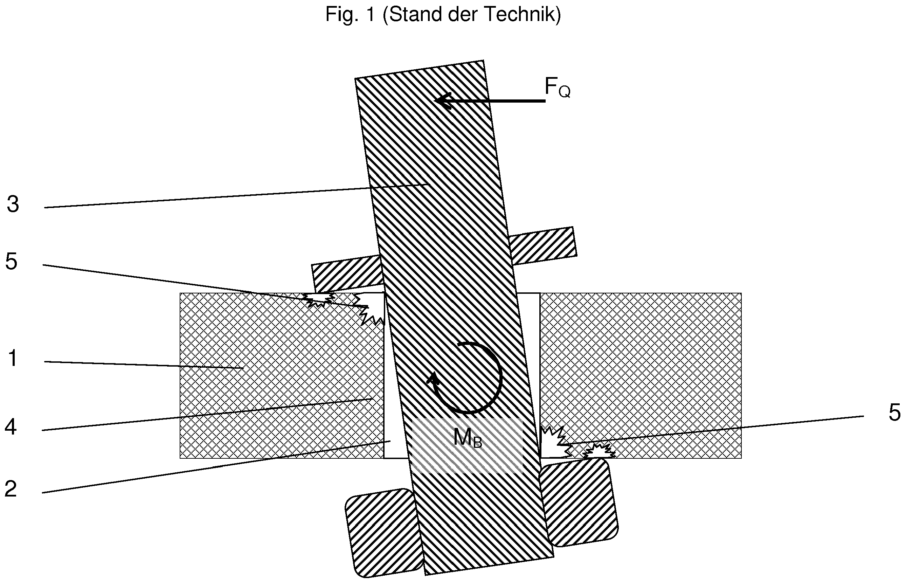

Aus den resultierenden Kräften, die einseitig und quer zum Durchgang des Bauteils über den Hebelarm des Anschlusselements wirken, resultiert ein Kipp- bzw. Biegemoment in der Vorrichtung, welches den Schwingreibverschleiß am Kunststoffbauteil zusätzlich begünstigt und letztlich zu einem vorzeitigen Versagen der Verbindung führt(vgl. Fig. 1, Vorrichtung zum Stand der Technik). Besonders gravierende Schäden entstehen infolge der Relativbewegungen und des Kipp- bzw. Biegemoments an Faserverbundbauteilen, deren Faserausrichtung im Wesentlichen senkrecht zur Längsachse des Durchgangs verläuft. Die Verstärkungsfasern halten in dieser Ausrichtung der Belastung weniger stand. Zudem wirken die orthogonal in der Lochleibungsfläche des Durchgangs endenden Verstärkungsfasern stark abrasiv auf das metallische Anschlusselement.

Der Erfindung liegt die Aufgabe zugrunde, eine Vorrichtung der eingangs genannten Art weiterzuentwickeln, die die genannten Nachteile des Standes der Technik beseitigt, insbesondere eine verbesserte Haltbarkeit einer dynamisch wirkenden und Querkräfte eintragenden Schraubverbindung am Bauteil aus Faserverbundwerkstoff gewährleistet.

Die Aufgabe wird durch eine Vorrichtung mit den Merkmalen des Patentanspruches 1 gelöst. Erfindungsgemäß wird vorgeschlagen, dass zur Krafteinleitung in das Bauteil aus Faserverbundwerkstoff die Schraubverbindung eine den Durchgang des Bauteils einfassende und das Anschlusselement aufnehmende zweiteilige Buchse aufweist, wobei das erste und das zweite Buchsenteil der Buchse in axialer Erstreckung ineinander greifend ausgebildet sind und jedes Buchsenteil einen radial erstreckten Bundkragen mit einer dem Bauteil zugewandten Kragenseite aufweist, auf der eine Gleitfläche ausgebildet ist.

Die Buchsenteile sind so ausgebildet, dass diese im Montagezustand den Durchgang des Kunststoffbauteils einfassen und eine Durchführung für das Anschlusselement bilden. Die erfindungsgemäße Schraubverbindung des Anschlusselements erfolgt mittelbar über die Buchsenteile mit dem Bauteil. Die Buchsenteile verfügen über Bundkragen, die im Montagezustand mit ihren dem Bauteil zugewandten Kragenseiten jeweils an der Oberseite bzw. Unterseite des Bauteils anliegen. Durch die erfindungsgemäße konstruktive Gestaltung der Buchsenteile, durch die das erste Buchenteil in das zweite Buchsenteil eingreift oder umgekehrt, stehen die beiden Buchsenteile miteinander in Wirkverbindung.

Mit dieser Vorrichtung kann das Kipp- bzw. Biegemoment, welches aus einer über das Anschlusselement einseitig eingeleiteten Querkraft resultiert, vornehmlich über die Bundkragen beider Buchsenteile flach auf der Ober- bzw. Unterseite des Kunststoffbauteils abgestützt werden. Das aus der einzuleitenden Kraft resultierende Biegemoment kann durch eine Druckkraft des jeweiligen Buchsenteils großflächig über den Bundkragen in die Ober- bzw. Unterseite des Bauteils aus Faserverbundmaterial eingeleitet werden. Dabei können die dem Bauteil zugewandten Kragenseiten der Bundkragen auf der Ober- bzw. Unterseite des Kunststoffbauteils abgleiten. Die Buchsenteile vollführen eine Relativbewegung gegenüber dem Bauteil, die mit Hilfe der erfindungsgemäßen Konstruktion weitestgehend radial gerichtet sind.

Die vorgesehene Gleitfläche der Kragenseiten an jedem der Buchsenteile weist eine geringe Rauheit auf und ist vorzugsweise geschliffen oder poliert ausgeführt. Es ist aber auch ein Ölfilm auf der Kragenseite denkbar. Die erhöhte Gleitfähigkeit der Kragenseiten der Bundkragen ermöglicht ein reibungsarmes Gleiten zwischen den Kragenseiten der Bundkragen und der Oberfläche des Bauteils und erleichtert die radial gerichteten Relativbewegungen der ineinandergreifenden Buchsenteile gegenüber dem Bauteil. Die Relativbewegungen, welche besonders intensiv bei einem aus dynamischen Querkräften resultierendem Kipp- bzw. Biegemoment auftreten, können so mit geringer Belastung für das Bauteil abgebaut werden.

Die am Anschlusselement wirkende Querkraft wird im Ergebnis vornehmlich senkrecht zur Lochleibungsfläche des Durchgangs und nicht winklig über die Randbereiche des Durchgangs in das Bauteil aus Faserverbundwerkstoff eingeleitet. Auf diese Weise wird die Reibung und der Verschleiß in der Lochleibung des Durchgangs verringert und die empfindlichen Kanten des Durchgangs weitestgehend vor Beschädigung geschützt.

Besonders vorteilhaft wirkt sich die erfindungsgemäße Vorrichtung bei Bauteilen aus Faserverbundwerkstoff mit im Wesentlichen senkrecht zur Längsachse des Durchgangs angeordneten Faserverlauf aus. Ein solches Bauteil hält den Belastungen durch die Krafteinleitung über die Lochleibungsfläche des Durchgangs vorzüglich stand, da die Krafteinleitung im Wesentlichen in Faserrichtung des Faserverbundbauteils und damit in Richtung höherer Belastbarkeit der Faserverbundstruktur erfolgt.

Vorteilhafte Ausgestaltungen und Weiterbildungen der Erfindung gehen aus den abhängigen Patentansprüchen 2 bis 12, der nachfolgenden Beschreibung und den zugehörigen Zeichnungen hervor.

In einer bevorzugten Ausführungsform der Vorrichtung weist das erste Buchsenteil einen axial erstreckten Schaft zur Anordnung im Durchgang des Bauteils und zum Eingriff in eine Öffnung des zweiten Buchsenteils auf. Die Einleitung der Querkraft in das Bauteil kann mittels des Schaftes über die gesamte Lochleibungsfläche des Durchgangs erfolgen; die Lochleibung und Randbereiche des Durchgangs werden dadurch noch besser geschont. Zugleich bietet die Steckverbindung des Schaftendes in der Öffnung des zweiten Buchsenteils eine konstruktiv einfache Lösung des Ineinandergreifens der Buchsenteile im Montagezustand.

Ist die Länge des Schaftes größer als die Wandstärke des Bauteils ausgebildet, kann im Montagezustand ein Schaftüberstand zur einfacheren Montage des zweiten Buchsenteils bereitgestellt werden.

Vorzugsweise ist die Außenkontur des Schaftendes korrespondiert zur der Innenkontur der Öffnung ausgebildet, so dass sich eine formschlüssige Steckverbindung ergibt. So kann die eingeleitete Querkraft besser auf die Buchsenteile verteilt und in Folge auf die Bundkragen übertragen werden.

Ist eine Außenkontur des Schaftes korrespondierend zur Innenkontur des Durchgangs ausgebildet, liegt der Schaft bündig an der Lochleibung an und bildet einen Formschluss mit dem Durchgang, so dass die eingeleitete Querkraft umso gleichmäßiger über die Lochleibungsfläche des Durchganges verteilt werden kann.

In einer besonders bevorzugten Ausführungsform ist zwischen dem Bundkragen des ersten Buchsenteils und einer ersten Seite des Bauteils und /oder zwischen dem Bundkragen des zweiten Buchsenteils und einer zweiten Seite des Bauteils eine Gleitscheibe, vorzugsweise aus gehärtetem Metall, Teflon, Keramik oder gleichwertigem Material angeordnet. Das Kipp- bzw. Biegemoment kann so über die Kragenseite des Bundkragens auf der Gleitscheibe abgestützt werden, ohne die Oberfläche des Bauteils stark zu beanspruchen. Das aus der einzuleitenden Kraft resultierende Biegemoment wird durch eine Druckkraft über das Buchsenteil in die Gleitscheibe und damit großflächig in das Bauteil eingeleitet. Zusätzlich kann das Buchsenteil über die Gleitscheibe abgleiten. Die Gleitscheibe mindert damit den Reibverschleiß auf der Oberfläche des Bauteils. Materialbedingt weist die Kontaktstelle zwischen der Gleitfläche der Kragenseite des Bundkragens und der Gleitscheibe einen geringeren Reibungskoeffizient auf, als die Kontaktstelle zwischen der Gleitscheibe und der Oberfläche des Bauteils. Das erzeugt einen geringeren Reibungswiderstand zwischen der Gleitscheibe und dem Bundkragen des jeweiligen Buchsenteils als zwischen der Gleitscheibe und dem Bauteil. Die Relativbewegungen aus der Krafteinleitung und zum Abgleiten des Buchsenteils finden vornehmlich zwischen dem Buchenteil und der zugehörigen Gleitscheibe statt, wobei die Oberfläche des Bauteils vor Reibungsvorgängen besser geschützt ist.

Vorzugsweise ist die Gleitscheibe derart ausgebildet und angeordnet, dass die Oberfläche einer dem Bundkragen zugewandten Seite der Gleitscheibe eine geringere Rauheit aufweist, als die Oberfläche einer dem Bauteil zugewandten Seite der Gleitscheibe. So z. B. kann die dem Bundkragen zugewandten Seite der Gleitscheibe geschliffen oder poliert sein, wogegen die dem Bauteil zugewandten Seite der Gleitscheibe durch beispielsweise Sandstrahlen aufgeraut sein kann. Dadurch ist der unterschiedliche Reibungswiderstand und Reibungskoeffizient beiderseits der Gleitscheibe noch deutlicher ausgeprägt. Die Gleitfähigkeit zwischen der Kragenseite des Bundkragens und der Gleitscheibe erhöht sich, so dass Reibung nur in einem sehr geringen Maß auf der Oberfläche des Bauteils zu erwarten ist.

Ist die Gleitscheibe stoffschlüssig, vorzugsweise durch Verkleben, mit dem Bauteil verbunden, ist zum Schutze der Bauteiloberfläche jegliche Reibung zwischen der Gleitscheibe und dem Bauteil unterbunden.

In einer vorteilhaften Ausführungsform der Vorrichtung weist die Gleitscheibe einen umlaufenden Bundsteg auf. Dieser Bundsteg, in den Durchgang weisend angeordnet, dient der zusätzlichen Anlage der Gleitscheibe an die Lochleibung des Durchganges. Mittels des Bundsteges kann die Lochleibungsfläche des Durchganges im Bauteil aus Faserverbundstoff noch besser vor Schwingreibverschleiß geschützt werden. Zudem wird der in den Durchgang ragende Schaft des Buchsenteils besser vor dem Abrieb durch die an der Lochleibungsfläche des Durchgangs mit ihren harten Schnittkanten endenden Fasern des Bauteils geschützt. Die Bundstege verhindern somit ggf. im Durchgang auftretenden Schwingreibverschleiß am Buchsenteil infolge minimaler Relativbewegungen zwischen dem Buchsenteil und dem Bauteil.

In einer besonders vorteilhaften Ausführungsform der Vorrichtung sind eine Außenkontur des Schafts des ersten Buchsenteils und eine Innenkontur des Bundstegs der Gleitscheibe derart korrespondierend ausgebildet, dass das erste Buchsenteil und die Gleitscheibe miteinander formschlüssig, vorzugsweise form-und kraftschlüssig, verbindbar sind. Ist im Montagezustand der Vorrichtung ein Buchsenteil formschlüssig, vorzugsweise form-und kraftschlüssig, mit dem Bundsteg der Gleitscheibe verbunden, kann der Normalkraft-Anteil der Querkraft zuverlässig über den Bundsteg in die Lochleibungsfläche des Durchgangs vom Bauteil eingeleitet werden. Die kraftschlüssige Verbindung kann beispielsweise mittels Presspassung durch eine an der Außenkontur des Schaftes ausgebildete Passfläche mit einer Passfläche der dem Schaft zugewandten Innenkontur des Bundsteges realisiert sein.

In einer weiteren vorteilhaften Ausführungsform der Vorrichtung weist das erste Buchsenteil an einem Übergang zwischen Bundkragen und Schaft eine umlaufende Ausnehmung auf und/oder ist das zweite Buchsenteil an einem Übergang zwischen Bundkragen und Öffnung mit einer Phase ausgebildet. Hierdurch ist der Übergang zwischen Schaft und Bundkragen des ersten Buchsenteils durch eine umlaufende Nut kontaktfrei zum Bauteil bzw. zur Gleitscheibe. Ebenso verfügt das zweite Buchsenteil an der Phase der Öffnung des zweiten Buchsenteils ein gewisses Spiel zum Bauteil bzw. zur Gleitscheibe. Damit wird die Gefahr einer winkligen Krafteinleitung auf die Kanten des Durchgangs des Kunststoffbauteils zusätzlich gemindert, wodurch das Bauteil noch besser vor dem Einwirken des Kipp- bzw. Biegemoments geschützt ist.

In einer bevorzugten Ausgestaltung weisen die Buchsenteile miteinander korrespondierende Passflächen oder miteinander korrespondierende Gewinde auf, so dass die Buchsenteile mittels einer Presspassung oder mittels einer Gewindeverbindung miteinander kraftschlüssig verbindbar sind. Das erhöht die Wirkverbindung der Buchsenteile zugunsten einer noch besser verteilten Einleitung des Kipp- bzw. Biegemoments auf beide Buchsenteile. Die lösbare Gewindeverbindung ermöglicht zudem eine einfache und zerstörungsfreie Montage und Demontage der Buchsenteile und gewährleistet eine Austauschbarkeit der Vorrichtungsteile.

In einer besonders bevorzugten Ausgestaltung der Vorrichtung sind die Buchse und das Anschlusselement derart ausgebildet, dass das Anschlusselement formschlüssig, vorzugsweise form-und kraftschlüssig, mit dem ersten Buchsenteil und/ oder mit dem zweiten Buchsenteil verbindbar ist.

Ist zum Beispiel eine Außenkontur des Anschlusselements korrespondierend mit einer Innenkontur des Schaftes des ersten Buchsenteils ausgebildet, kann im Montagezustand ein Formschluss zwischen dem Anschlusselement und dem ersten Buchsenteil realisiert werden, durch den der Normalkraft-Anteil der an dem Anschlusselement wirkenden Querkraft zuverlässig in das erste und zweite Buchsenteil und folglich plan in die Lochleibungsfläche des Durchgangs des Bauteils und in die Ober- und Unterseite des Bauteils eingeleitet werden.

Ist das Anschlusselement durch korrespondierende Konturen, wie zum Beispiel einer Außenkontur des Anschlusselements mit einer Innenkontur der Öffnung des zweiten Buchenteils, mit dem zweiten Buchsenteil formschlüssig verbunden, kann der Biegemoment-Anteil der Querkraft direkt vom Anschlusselement über das zweite Buchsenteil in die Ober- bzw. Unterseite des Bauteils eingeleitet werden.

Ist die Außenkontur des Anschlusselements und die Innenkontur des Schaftes des ersten Buchsenteils konisch ausgebildet, kann im Montagezustand eine kraftschlüssige Verbindung mittels Presspassung erzeugt werden, was die Kraftübertragung vom Anschlusselement auf die Buchsenteile noch wirksamer macht.

Weitere Vorteile ergeben sich, wenn das erste Buchsenteil und/ oder das zweite Buchsenteil zumindest abschnittsweise stoffschlüssig, vorzugsweise durch Verkleben, mit dem Bauteil verbunden ist. Mit dieser Maßnahme können in bestimmten Abschnitten, wie zum Beispiel im Durchgang des Bauteils, ungünstige Relativbewegungen zwischen den metallischen Buchsenteilen und dem Bauteil aus Faserverbundwerkstoff vollständig ausgeschlossen werden.

Diese und weitere aus den Patentansprüchen, der Beschreibung der Ausführungsbeispiele und den Zeichnungen hervorgehenden Merkmale können jeweils für sich oder in Kombination als vorteilhafte Ausführungsformen der Erfindung verwirklicht sein, für die hier Schutz beansprucht wird.

Die erfindungsgemäße Vorrichtung wird nachfolgend an zwei Ausführungsbeispielen näher erläutert. Die zugehörigen Zeichnungen zeigen in einer schematischen Darstellung in
- Fig. 1: eine Schnittansicht einer Vorrichtung zur Krafteinleitung in eine Platte aus Faserverbundwerkstoff nach dem Stand der Technik,
- Fig. 2: eine Schnittansicht einer erfindungsgemäßen Vorrichtung zur Krafteinleitung in eine Platte aus Faserverbundwerkstoff nach einem ersten Ausführungsbeispiel,
- Fig. 3: eine Schnittansicht einer erfindungsgemäßen Vorrichtung zur Krafteinleitung in eine Platte aus Faserverbundwerkstoff nach einem zweiten Ausführungsbeispiel,
- Fig. 4: eine Schnittansicht einer erfindungsgemäßen Vorrichtung zur Krafteinleitung in eine Platte aus Faserverbundwerkstoff nach einem dritten Ausführungsbeispiel,
- Fig. 5: eine Detailansicht A.1 der Verbindung der Buchsenteile der Vorrichtung nach Fig. 3 in einer ersten Ausführungsform,
- Fig. 6: eine Detailansicht A.2 der Verbindung der Buchsenteile der Vorrichtung nach Fig. 3 in einer zweiten Ausführungsform.

In Fig. 1 ist eine Vorrichtung zur Krafteinleitung in ein plattenartiges Bauteil 1 aus Faserverbundwerkstoff nach dem Stand der Technik dargestellt. Ein durch ein Loch 2 des Bauteils 1 führender Schraubbolzen 3 ist mittels einer Schraubverbindung mit dem Bauteil 1 verbunden. An einem freien Ende des Schraubbolzens 3 greift eine nicht dargestellte Konstruktion an. Planparallel zur Plattenebene auftretende Querkräfte F_{Q} der Konstruktion, insbesondere auch dynamische Querkräfte, werden einseitig des Bauteils 1 und über einen Hebelarm des Schraubbolzens 3 punktuell in das Bauteil 1 eingeleitet. Trotz der axialen form- und kraftschlüssigen Verspannung des Schraubbolzens 3 durch die Schraubverbindung mit dem Bauteil wird ein Kipp- bzw. Biegemoment M_{B} und folglich ein Kippen des Schraubbolzens 3 im Loch 2 des Bauteils 1 nicht verhindert. Während der Dauerbelastung durch die krafteinleitende Konstruktion erfährt die empfindliche Lochleibung 4 des Loch 2 einen erheblichen Schwingreibverschleiß, der sich in den Randbereichen 5 des Loch 2 besonders stark auswirkt, was letztlich zum Versagen der Verbindung führt.

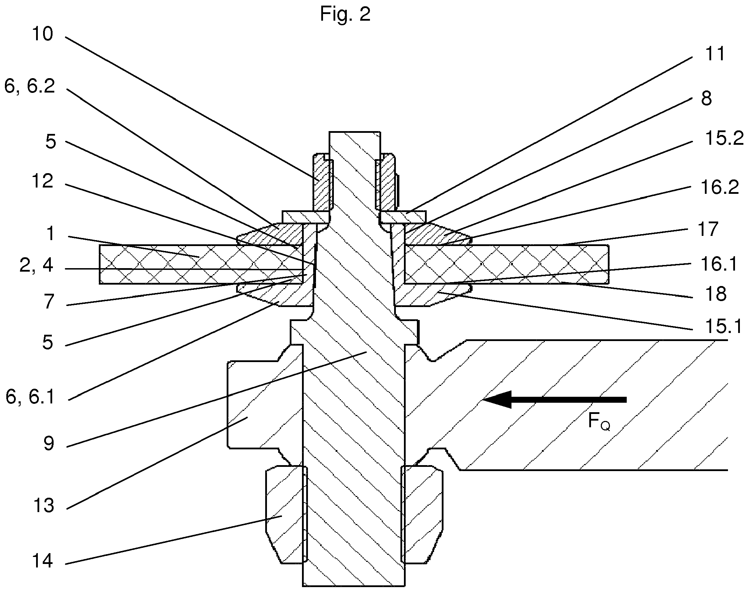

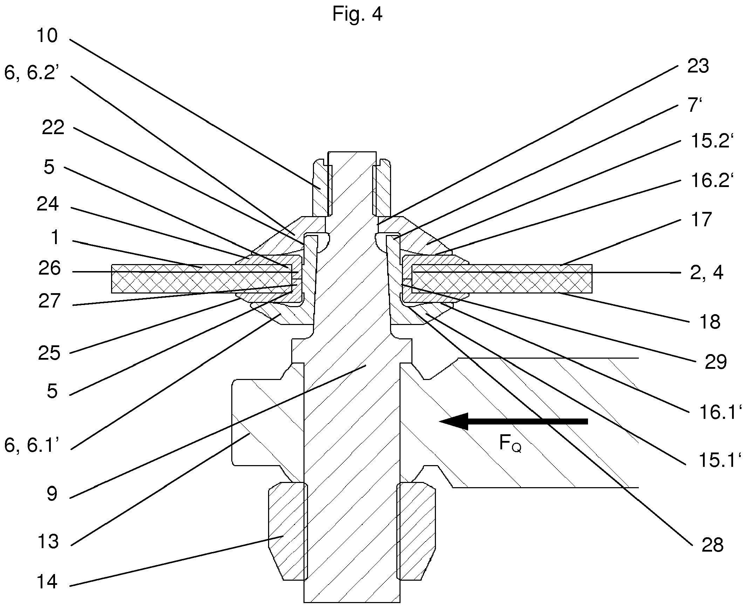

Fig. 2 zeigt eine erfindungsgemäße Vorrichtung zur Krafteinleitung in eine Platte 1 aus Faserverbundwerkstoff für beispielsweise eine Querlenkeranbindung an ein Kraftfahrzeug-Karosserieteil. In der Platte 1 ist ein rundlochförmiger Durchgang 2 ausgebildet. Die Vorrichtung weist eine zweiteilige, metallische Buchse 6 mit einem ersten, unteren Buchsenteil 6.1 und einem zweiten, oberen Buchsenteil 6.2 auf, die beiderseits der Platte 1 angeordnet sind. Beide Buchsenteile 6.1, 6.2 sind rotationssymmetrisch ausgebildet und mittels drehender Bearbeitung leicht herzustellen. Das untere Buchsenteil 6.1 verfügt über einen längserstreckten hohlzylindrischen Schaft 7, der durch den Durchgang 2 in der Platte 1 ragt. Der Schaft 7 liegt dabei bündig an einer Lochleibungsfläche 4 des Durchgangs 2 an. Der hohlzylindrische Schaft 7 endet in einer kreisrunden Durchgangsöffnung 8 des oberen Buchsenteils 6.2, wobei ein zumindest formschlüssiger Verbund der Buchsenteile 6.1, 6.2 als Steckverbindung hergestellt ist. Weitere Ausführungsformen der Verbindung beider Buchsenteile 6.1, 6.2 sind in den Figuren 4, 5 und 6 dargestellt und in der zugehörigen Beschreibung erläutert.

Ein bolzenartiges Anschlusselement 9 führt einen Endes durch den hohlzylindrischen Schaft 7 des unteren Buchsenteils 6.1 hindurch und ist mittels einer Mutter 10 und einer Unterlegscheibe 11 mit den Buchsenteilen 6.1, 6.2 verschraubt. Der Schaft 7 weist eine konisch verlaufende innere Passfläche 12 auf, die mit einer konisch ausgebildeten Mantelfläche des Anschlusselementes 9 korrespondiert, so dass bei der Verschraubung des Anschlusselementes 9 mit den Buchsenteilen 6.1, 6.2 eine zusätzliche kraftschlüssige Verbindung durch eine Presspassung zwischen dem Schaft 7 und dem Anschlusselement 9 erzeugt wird. An dem anderen Ende des Anschlusselements 9 ist ein Verbindungselement 13 einer nicht dargestellten Konstruktion, wie z.B. der eines Querlenkers, angeordnet, wobei das Verbindungselement 13 über eine weitere Schraubverbindung mit einer Mutter 14 mit dem Anschlusselement 9 verbunden ist. Von der nicht dargestellten Konstruktion wird eine parallel zur Plattenebene wirkende Querkraft F_{Q} über das Anschlusselement 9 punktuell in die Platte 1 eingeleitet.

Beide Buchsenteile 6.1, 6.2 verfügen über jeweils einen in radialer Richtung erstreckten Bundkragen 15.1, 15.2 mit einer Kragenseite 16.1, 16.2, die jeweils einer Seite der Platte 1, nämlich der Oberseite 17 bzw. der Unterseite 18 der Platte 1 zugewandt ist. Die Kragenseiten 16.1, 16.2 sind jeweils mit einer polierten Gleitfläche 16.1, 16.2 ausgebildet.

Die an der Vorrichtung angreifende Querkraft F_{Q} wird über den Schaft 7 des unteren Buchsenteils 6.1 hauptsächlich flächig in die Lochleibung 4 des Durchgangs 2 der Platte 1 eingeleitet. Ein aus der Hebelwirkung resultierendes Kipp- bzw. Biegemoment wird über die Bundkragen 15.1, 15.2 der beiden Buchsenteile 6.1, 6.2 großflächig auf der Oberseite 17 und der Unterseite 18 der Platte abgestützt, ohne die Randbereiche 5 des Durchgangs zu belasten. An der Kontaktstelle zwischen den Gleitflächen 16.1, 16.2 der Bundkragen 15.1, 15.2 und der Oberseite 17 bzw. Unterseite 18 der Platte 1 werden in radialer Richtung die Relativbewegungen der Buchsenteile 6.1, 6.2 mit geringer Reibkraft gegenüber der Platte 1 ermöglicht.

Diese Ausführungsform der erfindungsgemäßen Vorrichtung ermöglicht es, Schädigung oder Abnutzung der Platte 1 aus Faserverbundwerkstoff weitestgehend zu mindern.

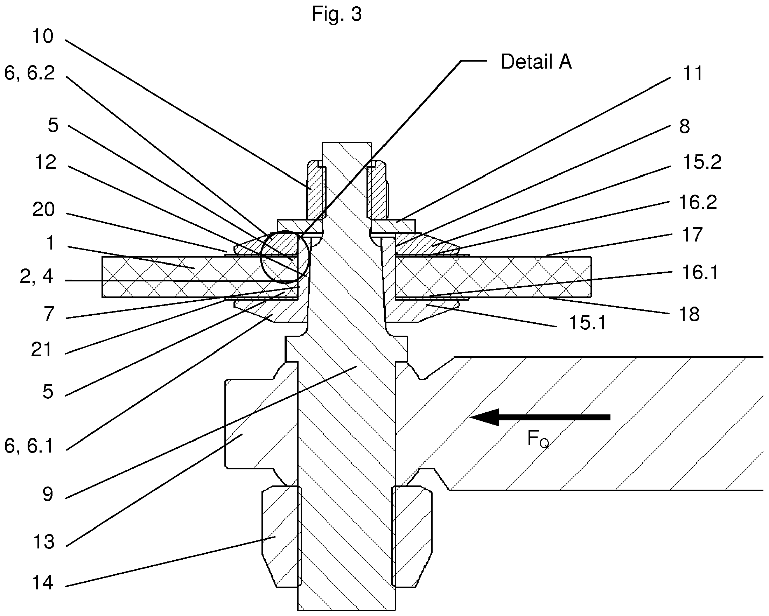

Fig. 3 zeigt eine erfindungsgemäße Vorrichtung zur Krafteinleitung in die Platte 1 aus Faserverbundwerkstoff nach einem zweiten Ausführungsbeispiel. Zur Vermeidung von Wiederholungen sollen nachfolgend nur die sich gegenüber der Vorrichtung nach Fig. 2 unterscheidenden Merkmale und Bauteile beschrieben werden. Bauteile mit gleicher Funktion haben gleiche Bezugszeichen.

Im Unterschied zur Vorrichtung nach Fig. 2 ist bei dieser Ausführungsform der erfindungsgemäßen Vorrichtung zwischen der Kragenseite 16.2 des Bundkragens 15.2 des oberen Buchsenteils 6.2 und der Oberseite 17 der Platte 1 sowie zwischen der Kragenseite 16.1 des Bundkragens 15.1 des unteren Buchsenteils 6.1 und der Unterseite 18 der Platte 1 jeweils eine dünne Gleitscheibe 20, 21 aus gehärtetem Metall angeordnet. Die Gleitscheiben 20, 21 haben eine mit dem Lochquerschnitt des Durchganges 2 übereinstimmenden Lochquerschnitt und bedecken so den Randbereich 5 des Durchgangs 2 vollständig. Die Gleitscheiben 20, 21 sind auf der Ober- bzw. Unterseite 17, 18 der Platte 1 aufgeklebt. Die den Bundkragen 15.1, 15.2 zugewandten Seiten der Gleitscheiben 20, 21 sind geschliffen oder poliert ausgeführt.

Das aus der Hebelwirkung resultierendes Kipp- bzw. Biegemoment wird über die Bundkragen 15.1, 15.2 der beiden Buchsenteile 6.1, 6.2 flächig auf den Gleitscheiben 20, 21 abgestützt. Die Gleitscheiben 20, 21 bilden hierbei eine verschleißfeste Schutzschicht für die empfindlichen Oberflächen an der Ober- und Unterseite 17, 18 der Platte 1. Die Relativbewegungen der Buchsenteile 6.1, 6.2 finden mit geringer Reibkraft ausschließlich an der Kontaktstelle zwischen den Gleitflächen 16.1, 16.2 der Bundkragen 15.1, 15.2 und der Gleitscheiben 20, 21 statt. Somit wird die Druckkraft aus dem Kipp- bzw. Biegemoment auf die Ober- bzw. Unterseite 17, 18 der Platte 1 noch besser verteilt und ein Reibverschleiß an den Randbereichen 5 des Durchgangs 2 und an der Ober- bzw. Unterseite 17, 18 gänzlich vermieden.

Fig. 4 zeigt eine erfindungsgemäße Vorrichtung zur Krafteinleitung in die Platte 1 aus Faserverbundwerkstoff nach einem dritten Ausführungsbeispiel. Zur Vermeidung von Wiederholungen werden lediglich die sich gegenüber der Vorrichtung nach Fig. 2 unterscheidenden Merkmale und Bauteile beschrieben. Bauteile mit gleicher Funktion haben gleiche Bezugszeichen.

Bei der alternativen Buchse 6' nach dieser Ausführungsform ist das obere Buchsenteil 6.2' mit einer kreisrunden, ausnehmenden Öffnung 22 und einer kreisrunden Durchgangsöffnung 23 ausgebildet. Das Ende des Schaftes 7' des unteren Buchsenteils 6.1' ist in der ausnehmenden Öffnung 22 des oberen Buchsenteils 6.2' gesteckt, während die Durchgangsöffnung 23 des oberen Buchsenteils 6.2' das durchführende Anschlusselement 9 umschließt. Hierdurch wird sowohl ein formschlüssiger Verbund der Buchsenteile 6.1', 6.2' miteinander als auch ein formschlüssiger Verbund des Anschlusselements 9 mit dem unteren und oberen Buchsenteil 6.1', 6.2' erzeugt. Dieser Formschluss trägt zu einer noch besseren Übertragung des Biegemomentanteils der Querkraft bei.

Das obere Buchsenteil 6.2' umfasst die Anlagefläche für die Mutter 10 und unterstützt durch ihre konische Form die Kraftverteilung auf die Ober- und Unterseite 17, 18 der Platte 1. Zwischen der Kragenseite 16.2' des Bundkragens 15.2' des oberen Buchsenteils 6.2' und der Oberseite 17 der Platte 1 sowie zwischen der Kragenseite 16.1' des Bundkragens 15.1' des unteren Buchsenteils 6.1' und der Unterseite 18 der Platte 1 ist jeweils eine winklige Gleitscheibe 24, 25 mit je einem umlaufenden Bundsteg 26, 27 angeordnet. Die Gleitscheiben 24, 25 umfassen den Randbereich 5 des Durchgangs 2 und bedecken die Lochleibungsfläche 4 des Durchgangs 2 vollständig. Damit ergibt sich ein umfassender Formschluss der Gleitscheiben 24, 25 mit der Platte 1. Die Gleitscheiben 24, 25 schützen zugleich die Ober- bzw. Unterseite 17, 18 und die Lochleibungsfläche 4 des Durchgangs 2 vor Reibverschleiß. Wie bei den Gleitscheiben 20, 21 nach Fig. 3 wird auch durch die Gleitscheiben 24, 25 eine Gleitebene zwischen den Kragenseiten 16.1', 16.2' der Bundkragen 15.1', 15.2' und der Gleitscheiben 24, 25 geschaffen.

Das untere Buchsenteil 6.1' ist an einem Übergang zwischen dem Bundkragen 15.1' und dem Schaft 7' mit einer umlaufenden Ausnehmung 28 in der Art einer vertieften Nut ausgeführt. Das verleiht der Konstruktion eine gewisse Elastizität zwischen dem Schaft 7' und dem Bundkragen 15.1', so dass ggf. wirkende Druckkräfte über die winklige Gleitscheibe 25 übertragen und auf der zugehörigen Gleitebene abgebaut werden.

Mit analoger Funktion ist der Übergang zwischen dem Bundkragen 15.2' des oberen Buchsenteils 6.2' und der ausnehmenden Öffnung 22 des oberen Buchsenteils 6.2' angefast. Ein diesem Bereich zugeordneter Abschnitt des Schaftes 7' des unteren Buchsenteils 6.1' ist verjüngt ausgebildet.

An einem Abschnitt des Schaftes 7' zwischen der Ausnehmung 28 und der Schaftverjüngung ist ein über den Umfang ragender Absatz mit einer äußeren Passfläche 29 ausgebildet, die mit den Bundstegen 26, 27 der Gleitscheiben 24, 25 korrespondiert. Über diese Passfläche 29 wird der Normalkraft-Anteil der einwirkenden Querkraft F_{Q} vorrangig in die Gleitscheiben 24, 25 und nachfolgend besonders gleichmäßig in die Lochleibungsfläche 4 eingeleitet.

Mit dieser Ausführungsform der erfindungsgemäßen Vorrichtung kann eine winklige Krafteinleitung in die Platte 1 infolge des Kipp-bzw. Biegemoments weitestgehend vermieden werden. Insbesondere werden die Randbereiche 5 des Durchgangs 2 der Platte 1 noch besser geschützt.

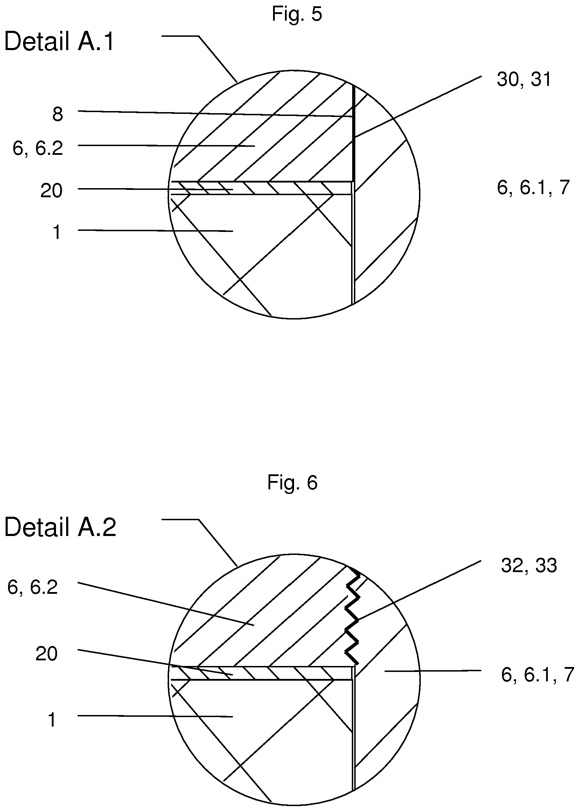

Fig. 5 zeigt eine schematische Detailansicht A.1 der Verbindung der Buchsenteile 6.1, 6.2 der Vorrichtung nach Fig. 3 mittels einer Presspassung. Die äußere Mantelfläche am Ende des Schafts 7 des unteren Buchsenteils 6.1 und die Mantelfläche der Durchgangsöffnung 8 des oberen Buchenteils 6.2 stehen über je eine Passfläche 30, 31 kraftschlüssig miteinander in Wirkverbindung.

Fig. 6 zeigt eine schematische Detailansicht A.2 der Verbindung der Buchsenteile 6.1, 6.2 der Vorrichtung nach Fig. 3 mittels einer Schraubverbindung. Die äußere Mantelfläche am Ende des Schafts 7 des unteren Buchsenteils 6.1 und die Mantelfläche der Durchgangsöffnung 8 weisen je ein ineinandergreifendes Gewinde 32, 33 auf.

Diese Maßnahmen erhöhen die Wirkverbindung der Buchsenteile 6.1, 6.2, um das Kipp- bzw. Biegemoment gleichmäßig in beide Buchsenteile 6.1, 6.2 einleiten zu können.

### Bezugszeichenliste

- 1: Bauteil, Platte aus Faserverbundwerkstoff
- 2: Loch, Durchgang
- 3: Schraubbolzen
- 4: Lochleibung des Loches, Durchgangs
- 5: Randbereich des Loches, Durchgangs
- 6: zweiteilige Buchse
- 6.1: erstes, unteres Buchsenteil
- 6.2: zweites, oberes Buchsenteil
- 7: Schaft des Buchsenteils
- 8: Öffnung, Durchgangsöffnung des Buchsenteils
- 9: Anschlusselement
- 10: Mutter
- 11: Unterlegscheibe
- 12: innere Passfläche des Schaftes
- 13: Verbindungselement
- 14: Mutter
- 15: Bundkragen des Buchsenteils, .1, .2
- 16: Kragenseite, Gleitfläche des Bundkragens .1, .2
- 17: Oberseite der Platte
- 18: Unterseite der Platte
- 20: Gleitscheibe
- 21: Gleitscheibe
- 22: Öffnung, ausnehmende Öffnung des Buchsenteils
- 23: Öffnung, Durchgangsöffnung des Buchsenteils
- 24: winklige Gleitscheibe
- 25: winklige Gleitscheibe
- 26: Bundsteg
- 27: Bundsteg
- 28: umlaufenden Ausnehmung
- 29: äußere Passfläche des Schaftes
- 30: innere Passfläche der Öffnung
- 31: äußere Passfläche des Schaftendes
- 32: Innengewinde der Öffnung
- 33: Außengewinde des Schaftendes

## Patentansprüche

1. Vorrichtung zur Krafteinleitung in ein Bauteil (1) aus Faserverbundwerkstoff mittels einer Schraubverbindung mit einem in einem Durchgang (2) des Bauteils (1) angeordneten bolzenartigen Anschlusselement(9), wobei die Schraubverbindung eine den Durchgang (2) des Bauteils (1) einfassende und das Anschlusselement (9) aufnehmende zweiteilige Buchse (6) aufweist, wobei das erste und das zweite Buchsenteil (6.1, 6.2) der Buchse (6) in axialer Erstreckung ineinander greifend ausgebildet sind und jedes Buchsenteil (6.1, 6.2) einen radial erstrecken Bundkragen (15.1, 15.2) mit einer jeweils einer Oberseite (17) und einer Unterseite (18) des Bauteils (1) zugewandten Kragenseite (16.1, 16.2) aufweist, auf der eine Gleitfläche ausgebildet ist.

2. Vorrichtung nach Anspruch 1, **dadurch gekennzeichnet, dass** das erste Buchsenteil (6.1) einen axial erstreckten Schaft (7) zur Anordnung im Durchgang (2) des Bauteils (1) und zum Eingriff in eine Öffnung (8, 22) des zweiten Buchsenteils (6.2) aufweist.

3. Vorrichtung nach Anspruch 1 oder 2, **dadurch gekennzeichnet, dass** eine Außenkontur des Schaftes (7) korrespondierend zur Innenkontur der Öffnung (8, 22) des zweiten Buchsenteils (6.2) ausgebildet ist.

4. Vorrichtung nach einem der Ansprüche 1 bis 3, **dadurch gekennzeichnet, dass** eine Außenkontur des Schaftes (7) korrespondierend zur Innenkontur (4) des Durchgangs (2) ausgebildet ist.

5. Vorrichtung nach einem der vorhergehenden Ansprüche, **dadurch gekennzeichnet, dass** zwischen dem Bundkragen (15.1) des ersten Buchsenteils (6.1) und einer ersten Seite (18) des Bauteils (1) und/oder zwischen dem Bundkragen (15.2) des zweiten Buchsenteils (6.2) und einer zweiten Seite (17) des Bauteils (1) eine Gleitscheibe (20, 21, 24, 25), vorzugsweise aus gehärtetem Metall, Teflon, Keramik oder gleichwertigem Material, angeordnet ist.

6. Vorrichtung nach Anspruch 5, **dadurch gekennzeichnet, dass** die Gleitscheibe (20, 21, 24, 25) derart ausgebildet und angeordnet ist, dass die Oberfläche einer dem Bundkragen (15.1, 15.2) zugewandten Seite der Gleitscheibe (20, 21, 24, 25) eine geringere Rauheit aufweist, als die Oberfläche einer dem Bauteil (1) zugewandten Seite der Gleitscheibe (20, 21, 24, 25).

7. Vorrichtung nach Anspruch 5 oder 6, **dadurch gekennzeichnet, dass** die Gleitscheibe (20, 21, 24, 25) stoffschlüssig, vorzugsweise durch Verkleben, mit dem Bauteil (1) verbunden ist.

8. Vorrichtung nach einem der Ansprüche 5 bis 7, **dadurch gekennzeichnet, dass** die Gleitscheibe (24, 25) einen umlaufenden Bundsteg (26, 27) aufweist.

9. Vorrichtung nach Anspruch 8, **dadurch gekennzeichnet, dass** eine Außenkontur (29) des Schafts (7) des ersten Buchsenteils (6.1) und eine Innenkontur des Bundstegs (26, 27) der Gleitscheibe (24, 25) derart korrespondierend ausgebildet sind, dass das erste Buchsenteil (6.1) und die Gleitscheibe (24, 25) miteinander formschlüssig, vorzugsweise form- und kraftschlüssig, verbindbar sind.

10. Vorrichtung nach einem der vorhergehenden Ansprüche, **dadurch gekennzeichnet, dass** das erste Buchsenteil (6.1) an einem Übergang zwischen Bundkragen (15.1) und Schaft (7) eine umlaufende Ausnehmung (28) aufweist und/oder das zweite Buchsenteil (6.2) an einem Übergang zwischen Bundkragen (15.2) und Öffnung (22) mit einer Phase ausgebildet ist.

11. Vorrichtung nach einem der vorhergehenden Ansprüche, **dadurch gekennzeichnet, dass** die Buchsenteile (6.1, 6.2) miteinander korrespondierende Passflächen (30, 31) oder miteinander korrespondierende Gewinde (32, 33) aufweisen.

12. Vorrichtung nach einem der vorhergehenden Ansprüche, **dadurch gekennzeichnet, dass** die Buchse (6) und das Anschlusselement (9) derart ausgebildet sind, dass das Anschlusselement (9) formschlüssig, vorzugsweise form- und kraftschlüssig, mit dem ersten Buchsenteil (6.1) und/ oder mit dem zweiten Buchsenteil (6.2) verbindbar ist.

13. Vorrichtung nach einem der vorhergehenden Ansprüche, **dadurch gekennzeichnet, dass** das erste Buchsenteil (6.1) und/ oder das zweite Buchsenteil (6.2) zumindest abschnittsweise stoffschlüssig, vorzugsweise durch Verkleben, mit dem Bauteil (1) verbunden ist.

## Claims

1. Device for force transmission in a component (1) made from fibre composite using a screw connection with a pin-type connection element (9) arranged in a passage (2) of the component (1), whereby the screw connection has a two-part socket (6) which surrounds the passage (2) of the component (1) and receives the connection element (9), whereby the first and second sockets parts (6.1, 6.2) of the socket (6) are formed extending in an axially interlocking way and each socket part (6.1, 6.2) has a radially extending flange (15.1, 15.2) with a collar side (16.1, 16.2) facing respectively an upper side (17) and a lower side (18) of the component (1) which is formed on the sliding surface.

2. Device according to claim 1, **characterised in that** the first socket part (6.1) has a shaft extending axially (7) for the formation in the passage (2) of the component (1) and for the operation of the second socket part (6.2) in an opening (8, 22).

3. Device according to claim 1 to 2, **characterised in that** an outer contour of the shaft (7) is formed correspondingly to an inner contour of the opening (8, 22) of the second socket part (6.2).

4. Device according to one of claims 1 to 3, **characterised in that** the outer contour of the shaft (7) corresponds to the inner contour (4) of the passage (2).

5. Device according to one of the previous claims, **characterised in that** a sliding disk (20, 21, 24, 25) is arranged between the shoulders (15.1) of the first socket part (6.1) and a first side (18) of the component (1) and/or between the shoulders (15.2) of the second socket part (6.2) and a second side (17) of the component (1) preferably made from hardened metal, Teflon, ceramic or equivalent material.

6. Device according to claim 5, **characterised in that** the sliding disk (20, 21, 24, 25) is formed and arranged in such a way that the surface of one of the sides of the sliding disc (20, 21, 24, 25) facing the shoulder (15.1, 15.2) has a lower roughness than the surface of a sliding disk (20, 21, 24, 25) facing the side of a component (1).

7. Device according to claim 5 or 6, **characterised in that** the sliding disk (20, 21, 24, 25) is firmly connected to the component (1), preferably by bonding.

8. Device according to one of claims 5 to 7, **characterised in that** the sliding disk (24, 25) has a circumferential shoulder (26, 27).

9. Device according to claim 8, **characterised in that** an outer contour (29) of the shaft (7) of the first socket part (6.1) and an inner contour of the shoulder (26, 27) of the sliding disc (24, 25) are formed correspondingly in such a way that the first socket part (6.1) and the sliding disk (24, 25) can be joined to one another in an interlocking way, and preferably connected to one another in an interlocking and force-fitting way.

10. Device according to one of the previous claims, **characterised in that** the first socket part (6.1) has a circumferential recess (28) in a passage between shoulders (15.1) and shaft (7), and/or that the second socket part (6.2) is formed in a passage between shoulders (15.2) and opening (22) with a phase.

11. Device according to one of the previous claims, **characterised in that** the socket parts (6.1, 6.2) have fitting surfaces (30, 31) corresponding to each another or threads (32, 33) corresponding to each another.

12. Device according to one of the previous claims, **characterised in that** the sockets (6) and the connection part (9) are formed in such a way that the connection element (9) can be connected to the first socket part (6.1) and/or to the second socket part (6.2) in an interlocking, preferably interlocking and force-fitting way.

13. Device according to one of the previous claims, **characterised in that** the first socket part (6.1) and/or the second socket part (6.2) is connected to the component (1) in a way which is at least interlocking section by section, preferably by bonding.

## Revendications

1. Dispositif de transmission de force dans une pièce (1) en matériau composite à base de fibres au moyen d'un raccord vissé avec un élément de liaison de type boulon (2) disposé dans une ouverture de passage (1) de la pièce (9), le raccord vissé présentant une douille en deux parties (2) qui encadre l'ouverture de passage (1) de la pièce (9) et accueille l'élément de liaison(6), les première et deuxième parties (6.1, 6.2) de la douille (6) s'imbriquant dans le sens axial et chaque partie de la douille (6.1, 6.2) étant dotée d'un collet dans le sens radial (15.1, 15.2) avec une face orientée (16.1, 16.2) vers une face supérieure (17) et une face inférieure (18) de la pièce (1) et dotée d'une surface de glissement.

2. Dispositif selon la revendication 1, **caractérisé en ce que** la première partie de la douille (6.1) présente une tige axiale (7) à disposer dans l'ouverture de passage (2) de la pièce (1) et à insérer dans une ouverture (8, 22) de la deuxième partie de la douille (6.2).

3. Dispositif selon la revendication 1 ou 2, **caractérisé en ce qu'**un contour extérieur de la tige (7) correspondant au contour intérieur de l'ouverture (8, 22) de la deuxième partie de la douille (6.2) est prévu.

4. Dispositif selon l'une des revendications 1 à 3, **caractérisé en ce que** un contour extérieur de la tige (7) correspondant au contour intérieur (4) du passage (2) est prévu.

5. Dispositif selon l'une des revendications précédentes, **caractérisé en ce que**, entre le collet (15.1) de la première partie de la douille (6.1) et une première face(18) de la pièce (1) et/ou entre le collet (15.2) de la deuxième partie de la douille (6.2) et une deuxième face (17) de la pièce (1), un disque de glissement (20, 21, 24, 25), de préférence en métal durci, Téflon, céramique ou tout autre matériau équivalent, est disposé.

6. Dispositif selon la revendication 5, **caractérisé en ce que** le disque de glissement (20, 21, 24, 25) est constitué et disposé de telle manière que la surface de l'une des faces du disque de glissement (20, 21, 24, 25) tournée vers le collet (15.1, 15.2) présente une rugosité inférieure à celle de la surface d'une face du disque de glissement (20, 21, 24, 25) tournée vers la pièce (1).

7. Dispositif selon la revendication 5 ou 6, **caractérisé en ce que** le disque de glissement (20, 21, 24, 25) est raccordé à la pièce (1) par liaison de matière, de préférence par collage.

8. Dispositif selon l'une des revendications 5 à 7, **caractérisé en ce que** le disque de glissement (24, 25) présente une marge périphérique (26, 27).

9. Dispositif selon la revendication 8, **caractérisé en ce qu'**un contour externe (29) de la tige (7) de la première partie de la douille (6.1) et un contour interne de la marge (26, 27) du disque de glissement (24, 25) sont disposés de telle manière que la première partie de la douille (6.1) et le disque de glissement (24, 25) sont raccordables mécaniquement, de préférence par adhérence et par engagement.

10. Dispositif selon l'une des revendications précédentes, **caractérisé en ce que** la première partie de la douille (6.1) présente, au niveau d'un passage entre le collet (15.1) et la tige (7), une cavité périphérique (28) et/ou la deuxième partie de la douille (6.2) est conçue avec une phase au niveau d'un passage entre le collet (15.2) et l'ouverture (22).

11. Dispositif selon l'une des revendications précédentes, **caractérisé en ce que** les parties de la douille (6.1, 6.2) présentent des surfaces de contact (30, 31) correspondant entre elles ou des filetages (32, 33) correspondant entre eux.

12. Dispositif selon l'une des revendications précédentes, **caractérisé en ce que** la douille (6) et l'élément de liaison (9) sont conçus de telle manière que l'élément de liaison (9) est raccordable mécaniquement, de préférence par adhérence et par engagement, avec la première partie de la douille (6.1) et/ou avec la deuxième partie de la douille (6.2).

13. Dispositif selon l'une des revendications précédentes, **caractérisé en ce que** la première partie de la douille (6.1) et/ou la deuxième partie de la douille (6.2) sont raccordées par liaison de matière, de préférence par collage, à la pièce (1), au moins par sections.
